# EUROPEAN PATENT APPLICATION

(11) **EP 2 014 975 A1**
(43) Date of publication of application: **14.01.2009**
(21) Application number: 08154281.3
(22) Date of filing: 09.04.2008
(51) Int. Cl.: F21V 33/00, F25D 27/00, G02B 6/00, F21K 7/00

(54) **Lighting device, and electric household applicance equipped with such a device**

(30) Priority: 13.07.2007 EP 07112496
(71) Applicant: Electrolux Home Products Corporation N.V., 1930 Zaventem (BE)
(72) Inventor: Barabesi, Silvano, 50125 Firenze (IT); Alberghetti, Paolo, 31020 San Vendemiano (IT); Coan, Marco, 31100 Treviso (IT); Urban, Wählby, 31015 Conegliano (IT); Sacconi, Massimo, 50125 Firenze (IT)
(74) Representative: Jorio, Paolo

(57) **Abstract**

An electric household appliance (2) having a box casing (3) provided with an inner compartment (4), and a lighting device (1) located inside this compartment (4); the lighting device (1) comprising a flat body (6, 14, 17) of transparent and/or semitransparent material, and at least one light-emitting diode (7) optically coupled to the flat body (6, 14, 17)) to project the emitted light inside of the flat body (6, 14, 17) sideways of the latter, so as that the flat body (6, 14, 17) acts as a light guide; the flat body (6, 14, 17) having a front face (6a) and a rear face (6b, 14b, 17b) opposite one to the other, and being designed so that the surface of said rear face (6b, 14b, 17b) has a Fresnel type lens relief pattern in order to reflect the light produced by the at least one light-emitting diode (7) and traveling inside the flat body (6, 14, 17), outwards of the flat body (6, 14, 17) through the front face (6a) of said flat body (6, 14, 17); said at least one seat (9, 15, 18) is formed in the front or rear face (6b, 14b, 17b) of the flat body (6, 14, 17), and said at least one light-emitting diode (7) is housed inside said seat (9, 15, 18).

## Description

The present invention relates to a lighting device.

More specifically, the present invention relates to a lighting device for indoors and outdoors, which is also particularly advantageous for lighting the inside of certain types of electric household appliances, such as home refrigerators.

In particular, the present invention is particularly suitable for home refrigerator for storing bottles of wine (wine cellar), to which application the following description refers purely by way of example. However it will be most readily appreciated that the lighting device according to the present invention can be integrated in any kind of refrigerator.

As is known, some home refrigerators are specially designed for long-term storage of a predetermined number of bottles of wine in a horizontal position and in the best environmental conditions for the wine to mature correctly.

More specifically, refrigerators of this sort normally comprise a normally parallelepiped-shaped outer box casing with two separate, independent, thermally insulated inner compartments, each of which is closed hermetically by a door having a central portion made of transparent material; and a heat-pump cooling circuit designed to regulate the temperature inside the two compartments independently of each other.

More specifically, one of the two temperature-controlled compartments is normally used for storing bottles of white wine, and is maintained at a constant temperature preferably, though not necessarily, ranging between 3°C and 10°C, while the other temperature-controlled compartment is used for storing bottles of red wine, and is maintained at a constant temperature preferably, though not necessarily, ranging between 12°C and 20°C.

The heat-pump cooling circuit of refrigerators of this type is therefore designed to keep the first compartment at a reference temperature ranging between 3°C and 10°C, and the second compartment at a reference temperature ranging between 12°C and 20°C.

Inside each temperature-controlled compartment, refrigerators for storing bottles of wine also comprise a rack for a number of superimposed rows of horizontal bottles; and a system of lamps for lighting the inside of the compartment on command.

In refrigerators, location of the lamps inside the compartment has always posed serious problems, by having to meet two conflicting requirements: optimum lighting of all the bottles (or any kind of food items in case of conventional refrigerator) stored in the compartment, and minimum heat transfer inside the compartment, to avoid overloading the cooling circuit. The lamps, in fact, are left on, when the door is closed, even for prolonged periods of time, to use the refrigerator as a showcase for displaying the bottles.

Unfortunately, existing lighting solutions for compartments of refrigerators of this sort have not been very successful. According to users, in fact, when the compartment is full, the bottles or food items at the centre of the compartment are poorly illuminated, on account of the shadows cast by the surrounding bottles or food items closer to the light source.

Up to now, this drawback has only been solved superficially, by increasing both the number of incandescent lamps and the power of the cooling circuit, with all the additional drawbacks this entails.

It is an object of the present invention to provide a home refrigerator for storing bottles of wine and similar, designed to eliminate the aforementioned drawbacks.

According to the present invention, there is provided an electric household appliance as claimed in Claim 1 and preferably, though not necessarily, in any one of the Claims depending directly or indirectly on Claim 1.

According to the present invention, there is also provided a lighting device as claimed in Claim 18 and preferably, though not necessarily, in any one of the Claims depending directly or indirectly on Claim 18.

A non-limiting embodiment of the present invention will be described by way of example with reference to the accompanying drawings, in which:
Figure 1 shows a partly exploded view in perspective, with parts in section and parts removed for clarity, of an enclosure lighting device in accordance with the teachings of the present invention;
Figure 2 shows a section view of the Figure 1 lighting device;
Figure 3 shows a section view of a first variation of the Figure 1 lighting device;
Figure 4 shows a view in perspective, with parts in section and parts removed for clarity, of the top of a home refrigerator in accordance with the teachings of the present invention;
Figure 5 shows a view in perspective, with parts removed for clarity, of a second variation of the Figure 1 lighting device;
Figure 6 is a section view of the Figure 5 lighting device;
Figure 7 shows a view in perspective, with parts removed for clarity, of a third variation of the Figure 1 lighting device; and
Figures 8 is a section view, with parts removed for clarity, of the Figure 7 lighting device.

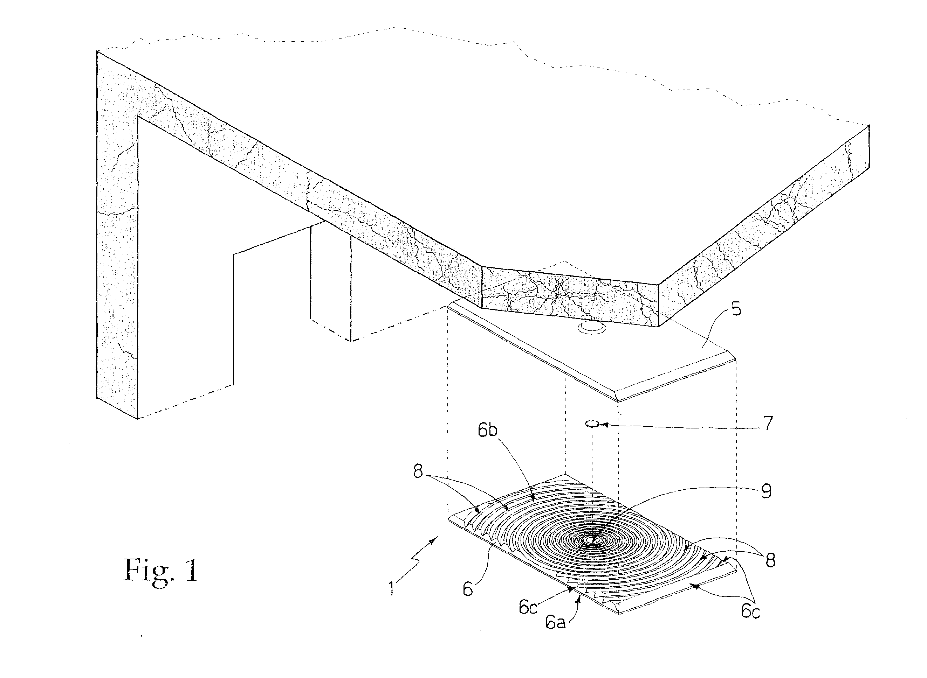

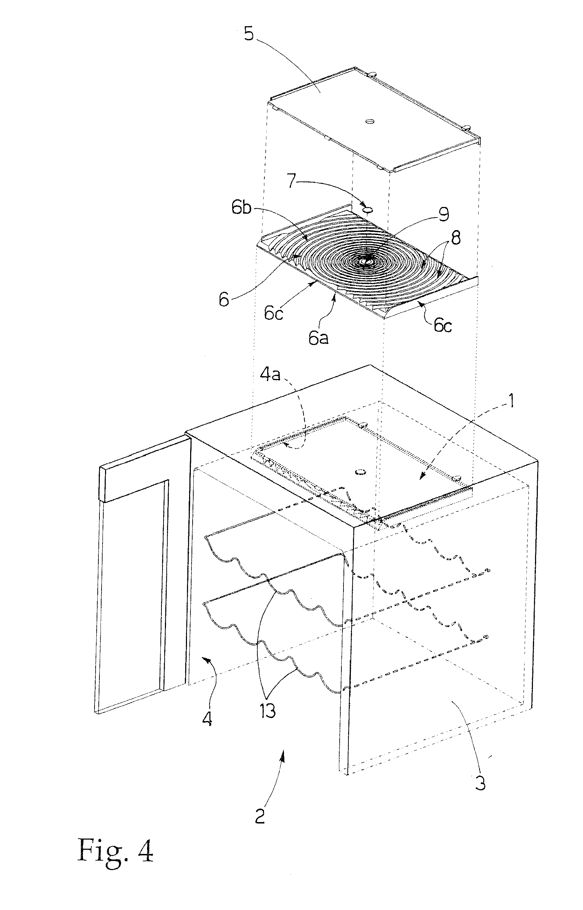

With reference to Figures 1 and 4, number 1 indicates as a whole a lighting device for indoors and outdoors, which may advantageously be also used for lighting the inside of a refrigerator, oven, dishwasher, or any other electric household appliance 2 comprising an outer box casing 3 having an inner compartment 4 accessible from the outside and which, when needed, must be illuminated uniformly, even for prolonged periods of time.

More specifically, with reference to Figure 4, lighting device 1 may be integrated in a home refrigerator 2 for storing bottles of wine, and which, in the example shown, comprises two independent, temperature-controlled compartments, each of which is maintained at a predetermined constant reference temperature preferably, though not necessarily, differing from that of the other compartment.

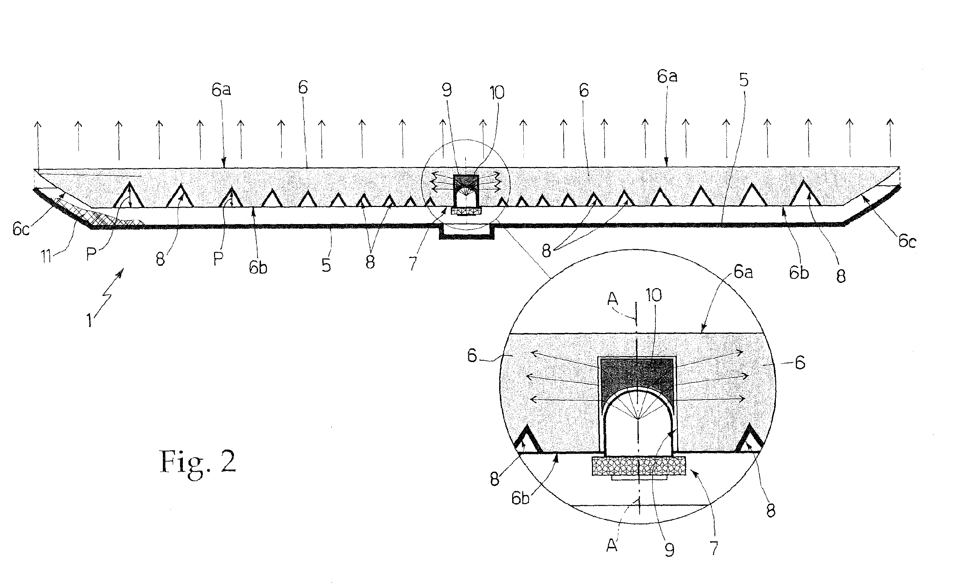

With reference to Figures 1 and 2, lighting device 1 substantially comprises supporting means 5 adapted to be fixed to the ceiling or wall or floor of a generic enclosure, and a substantially flat body 6 of transparent and/or semitransparent material (i.e. at least partially transparent), which is associated to supporting means 5 so that a first or "visible" face of flat body 6 substantially faces the enclosure to be illuminated, whereas a second face of flat body 6 is located adjacent to and faces supporting means 5.

More specifically, lighting device 1 substantially comprises a preferably, though not necessarily, parallelepiped-shaped, rigid container 5 designed to be fixed to the ceiling or wall or floor of a generic enclosure, with the opening of container 5 preferably, though not necessarily, facing the floor; and a flat sheet 6 of given thickness and of transparent and/or semitransparent material, which is substantially complementary in shape to that of container 5, and is housed inside container 5 so that the front or "visible" face of flat sheet 6 - hereinafter indicated 6a - is substantially aligned with the peripheral edge of the opening of container 5, and the rear or inner face of flat sheet 6 - hereinafter indicated 6b - is located adjacent to the bottom of container 5.

In other words, front face 6a and rear face 6b of flat sheet 6 are opposite one to the other, and front face 6a of flat sheet 6 directly faces the floor or any wall of the enclosure for lighting.

Lighting device 1 also comprises one or more light-emitting diodes 7 - hereinafter abbreviated LEDs - optically coupled to the body of sheet 6 to project the emitted light directly into the body of sheet 6 sideways of the latter, so as to cause the emitted light to travel inside the body of sheet 6 (i.e. along the inside of flat sheet 6) which acts as a light guide. This light would remain trapped inside the body of sheet 6, which defines a light guide path delimited by and substantially parallel to front face 6a and to rear face 6b, by virtue of the same physical principles governing the propagation of light inside optical-fibre cables, if not for the fact that flat sheet 6 is specially designed so that the light exits gradually through the surface of front face 6a. LEDs 7 are obviously powered by a known electric energy source not shown.

More specifically, as shown in Figures 1 and 2, rear face 6b of flat sheet 6 has a number of substantially triangular-section grooves 8, which impart to the surface of rear face 6b a serrated profile similar to that of a Fresnel lens, so as to divert the light trapped inside flat sheet 6 outwards; and LED/s 7 is/are housed inside at least one dead or through seat 9 formed preferably more or less in the centre of rear face 6b.

In practice, the light traveling along the inside of the body of sheet 6 (along the light guide path) impinge on the surfaces delimiting grooves 8 on rear face 6b, and such surfaces reflect or divert the incident light outwards of the body of sheet 6 through front face 6a.

In the example shown, flat sheet 6 is preferably, though not necessarily, made of polymethyl methacrylate (commonly known as Plexiglas or PMMA) or similar transparent or semitransparent material (e.g. glass, polyester, or polycarbonate), and comprises, on rear face 6b, a number of substantially triangular-section, concentric annular grooves 8 surrounding and substantially coaxial with seat 9, which is in the form of a circular-section dead hole 9 with its axis of symmetry locally perpendicular to the plane of flat sheet 6.

In the example shown, concentric annular grooves 8 have a maximum depth p, which increases alongside an increase in the distance from seat 9 housing LEDs 7. In other words maximum depth p of annular grooves 8 increases from the centre of the rear face 6b towards the periphery.

Moreover, the surface of flat sheet 6 defining the peripheral edge 6c of the sheet is substantially in the form of a funnel or hopper, flares towards front face 6a to deflect onto front face 6a the light travelling along the body of sheet 6 up to peripheral edge 6c of the sheet.

In other words, peripheral edge 6c of flat sheet 6 is shaped so that the light rays travelling along the body of sheet 6 impinge on the surface of the sheet defining peripheral edge 6c at an incidence angle which is locally greater than the limit angle, so as to reflect the ray onto front face 6a.

In addition, in the example shown, the surface of flat sheet 6 inside each annular groove 8 is made rougher than the rest of flat sheet 6, so as to increase the amount of light diverted outwards of flat sheet 6 through front face 6a.

The light may also be made to issue gradually through front face 6a of flat sheet 6 by screen-printing or painting the surface of front face 6a to locally increase the surface roughness of flat sheet 6.

As regards LEDs 7, lighting device 1 in the example shown comprises one high-efficiency LED 7 housed inside seat 9, and at least one lens 10 arranged inside seat 9 to divert the light emitted by LED 7, so as to cause the diverted light to enter the body 6 and travel inside the latter. More specifically, in the example shown high-efficiency LED 7 is housed inside seat 9 so that the optical axis A of the light cone produced by the LED is substantially perpendicular to the plane on which the sheet 6 extends, and lens 10 is designed to divert the light rays along a directrix locally substantially parallel to the plane on which the sheet 6 extends, so that the light emitted by LED 7 enters the body of sheet 6 through the side or thickness of sheet 6.

Lens 10 may, obviously, be replaced by or combined with a prism to form a more efficient optical device arranged inside seat 9 so as to direct the emitted light towards the body side of sheet 6, almost perpendicularly to the reference lying plane of sheet 6. Preferably lens 10 is made in one piece with flat sheet 6.

With reference to Figures 1 and 2, lighting device 1 preferably, though not necessarily, also comprises an opaque cover film or layer 11, possibly reflective, which is placed on the bottom of container 5, so as to reflect/diffuse back onto flat sheet 6, and hence onto front face 6a, any light issuing accidentally from rear face 6b of flat sheet 6. Obviously the bottom of container 5 itself can reflect/diffuse back onto flat sheet 6, and hence onto front face 6a, any light issuing accidentally from rear face 6b of flat sheet 6.

Preferably, though not necessarily, opaque film or layer 11 extends over the bottom of container 5 to cover substantially the whole surface of rear face 6b.

In the example shown, opaque film or layer 11 is defined by a coat 11 of preferably, though not necessary, white opaque paint covering the whole inner surface of container 5 directly facing rear face 6b of flat sheet 6.

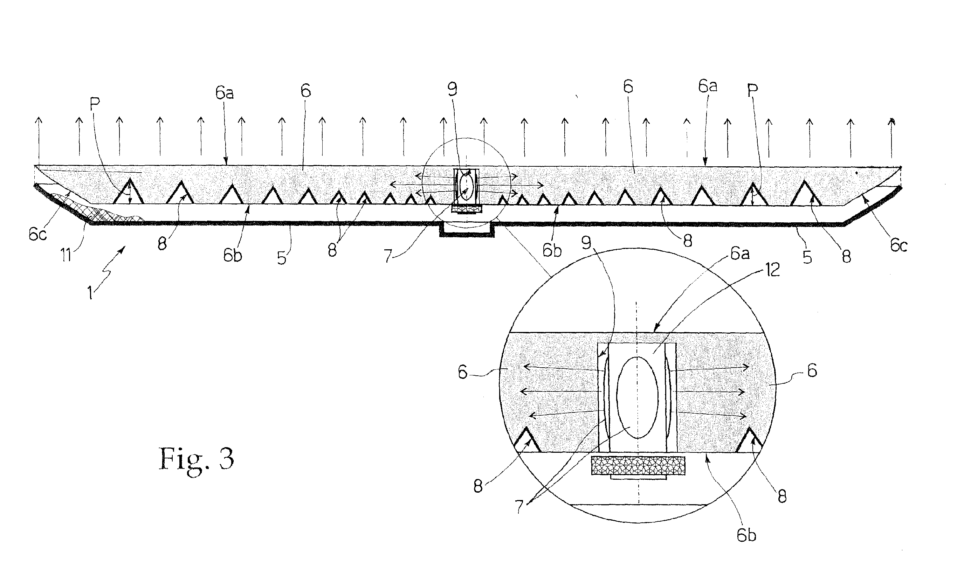

With reference to Figure 3, in an alternative embodiment, lighting device 1 comprises a number of LEDs 7 arranged angularly inside seat 9 in rear face 6b, so as to cause the light emitted by LEDs 7 to directly enter into the side of flat sheet 6 and travel inside the latter.

More specifically, in the example shown, LEDs 7 are arranged angularly on the lateral surface of a cylindrical supporting hub 12 inserted inside seat 9, so that the individual LEDs 7 directly face the side of flat sheet 6. In this case, the optical axis of the light cone produced by each LED 7 is substantially parallel to the plane on which the sheet 6 extends, and the light emitted by LEDs 7 enters the body of sheet 6 directly through the body side or thickness of flat sheet 6.

With particular reference to Figure 4, home refrigerator 2 for storing bottles of wine comprises a rigid, self-supporting, substantially parallelepiped-shaped box casing 3 having two temperature-controlled inner compartments located one over the other, and each of which is lined with thermally insulating material, and communicates with the outside through a respective access opening formed in the vertical front wall of box casing 2.

The bottom compartment (not shown) is used for storing bottles of red wine, and is maintained at a reference temperature preferably, though not necessarily, ranging between 12°C and 20°C; and the top compartment, indicated by number 4, is used for storing bottles of white wine, and is maintained at a reference temperature preferably, though not necessarily, ranging between 3°C and 10°C.

Refrigerator 2 comprises two doors hinged, one over the other, to the vertical front wall of box casing 3 to rotate - both about a preferably, though not necessarily, common vertical axis - to and from a closed position, in which each door rests against the vertical front wall of box casing 3 to close the access opening of a respective temperature-controlled compartment and seal the compartment off from the outside environment.

With reference to Figure 4, inside each temperature-controlled compartment, refrigerator 2 also comprises at least one rack 13 for a number of superimposed rows of substantially horizontal bottles; and at least one lighting device 1 for lighting the inside of compartment 4 on command.

Like any other refrigerator, refrigerator 2 comprises a heat-pump cooling circuit (not shown), which transfers heat between the outside environment and either one of the temperature-controlled compartments, using the changes in state of a refrigerant subjected to a closed thermodynamic cycle, and which is designed to keep the contents of each temperature-controlled compartment at a respective predetermined reference temperature possibly user-selectable from a given temperature range.

Box casing 3, the doors, rack 13, and the heat-pump cooling circuit are all parts commonly used in the industry, and therefore not described in detail.

As regards lighting device 1, on the other hand, box casing 3 of refrigerator 2 comprises, inside temperature-controlled compartment 4, a seat 4a sized to house lighting device 1 with front face 6a of flat sheet 6 facing inwards of compartment 4; device 1 is housed inside seat 4a; and supporting means 5 are substantially in the form of a tray 5 covering rear face 6b of flat sheet 6.

Operation of refrigerator 2 will be clear from the foregoing description, with no further explanation required.

As regards lighting device 1, on the other hand, the light produced by LED/s 7 housed inside seat 9 enters the body of sheet 6 through the side of flat sheet 6; travels inside the body of sheet 6 through the light guide path between the front and rear faces 6a and 6b; and exits gradually and uniformly from the surface of front face 6a to produce a light beam of substantially uniform intensity along the whole front face 6a of flat sheet 6.

Lighting device 1 has numerous advantages. By virtue of its design, lighting device 1 produces a highly homogeneous, uniform light beam, which propagates inside compartment 4 of appliance/refrigerator 2 without transmitting any heat inside the compartment, and which is not dimmed by any small obstacles in front of lighting device 1.

The electric power dissipated by a LED in the form of heat, in fact, is much lower than that of an incandescent lamp of equal capacity, and one LED is sufficient to illuminate an entire wall of the refrigerator compartment, by appropriately designing flat sheet 6.

Moreover, the total thickness of lighting device 1 is extremely small (the thickness of flat sheet 6, in fact, preferably, though not necessarily, ranges between 0.5 and 3 centimetres), so it can be fitted to the bottom, the ceiling, and/or any other side of compartment 4 of appliance/refrigerator 2.

Clearly, changes may be made to lighting device 1 and electric household appliance 2 as described herein without, however, departing from the scope of the present invention.

For example, supporting means 5, i.e. container 5, may be incorporated directly inside box casing 3. More specifically, container 5 may be defined by the portion of box casing 3 in which seat 4a is formed, and flat sheet 6 may be fixed directly inside seat 4a, with front face 6a facing compartment 4, and with LED/s 7 housed inside seat 9.

In which case, front face 6a of flat sheet 6 is substantially aligned with the peripheral edge of the opening of seat 4a, and rear face 6b is located adjacent to the bottom of seat 4a in box casing 3.

In one variation, grooves 8 may be elliptical or straight, and may possibly intersect.

Although the body 6 is preferably flat, it can have any thickness allowing the light to be reflected from the rear face 6b to the front face 6a and to be issued thereform. Moreover, the body 6 can be substantially planar or curved.

As stated, lighting device 1 may, obviously, be located anywhere inside compartment 4.

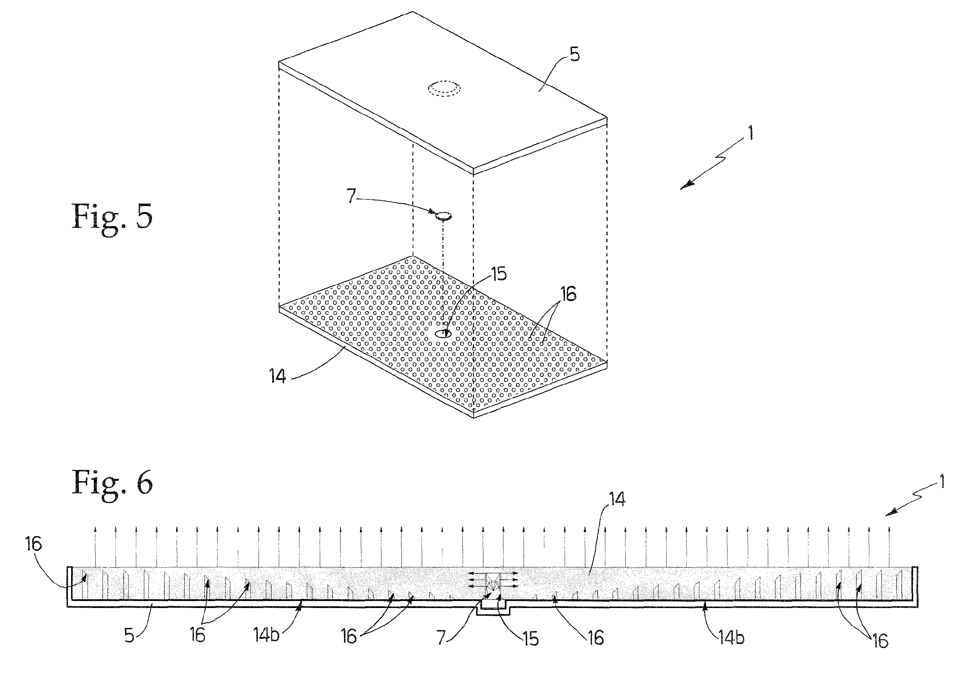

With reference to Figures 5 and 6, in a different embodiment the flat body of lighting device 1 consists of a flat sheet 14 of transparent or semitransparent material and of substantially constant thickness, which is complementary in shape to that of container 5 and has a circular-section dead hole 15 on the center of its rear or inner face 14b directly facing the bottom of container 5. Dead hole 15 defines the seat of LED/s 7, and flat sheet 14 also comprises a number of substantially circular-section blind holes 16, which are evenly distributed on rear face 14b; have a nominal diameter smaller than that of dead hole 15 and preferably, though not necessarily, ranging between 2 and 3 millimeters; and have a maximum depth which increases alongside an increase in the distance from dead hole 15 housing LEDs 7.

More specifically, in the example shown flat sheet 14 is made of glass, polymethyl methacrylate, polyester, polycarbonate or similar transparent or semitransparent materials and has a constant thickness preferably, though not necessarily, ranging between 5 and 20 millimeters; whereas blind holes 16 have a nominal diameter of 2,5 millimeters, and have their bottom surface sloped of preferably, though not necessarily, 45 degrees with respect to the longitudinal axis of the hole, towards dead hole 15.

In other words, the sloped bottom surface of each blind hole 16 faces the dead hole 15, and the maximum depth of the blind holes 16 increases from the centre of the rear face 6b towards the periphery so that the bottom surfaces of the blind holes 16 define together a sort of Fresnel type profile into the body of flat sheet 14.

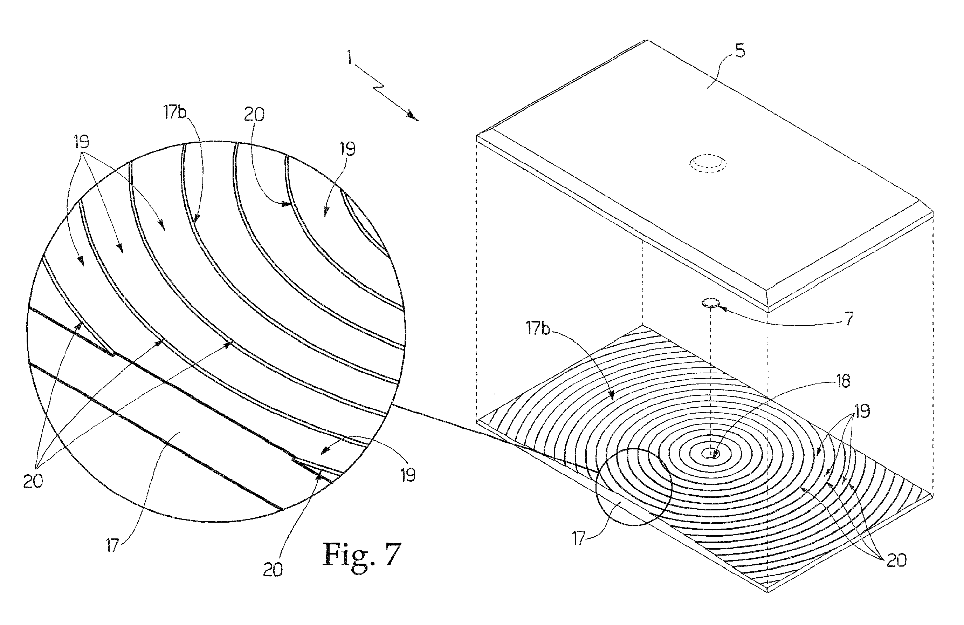

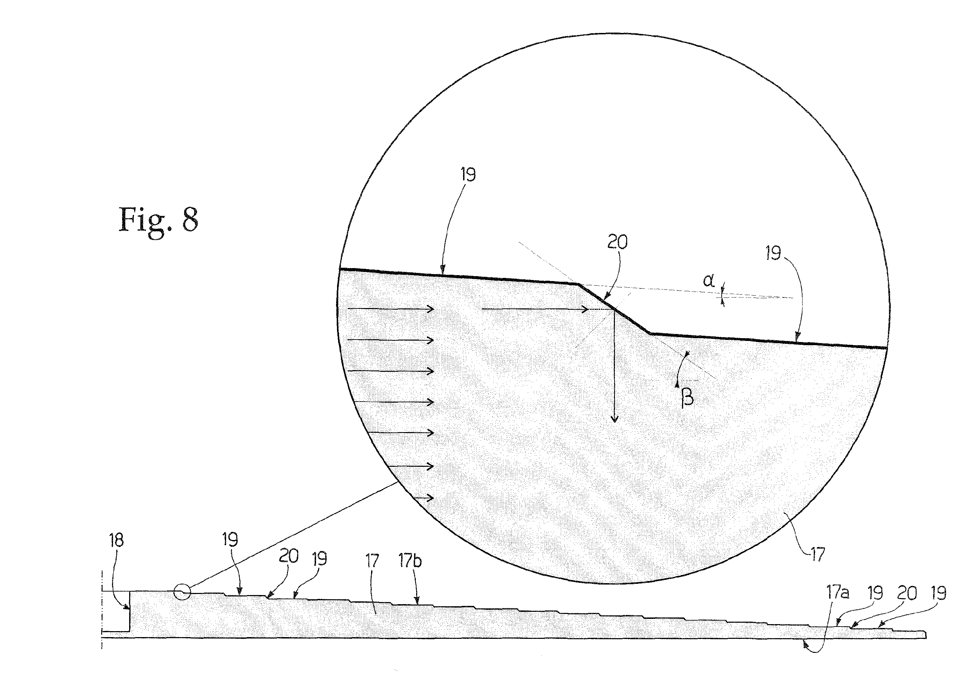

With reference to Figures 7 and 8, in an other embodiment the flat body of lighting device 1 consists of a flat sheet 17 of transparent or semitransparent material (in the example shown flat sheet 17 is made of glass, polymethyl methacrylate, polyester, polycarbonate or similar transparent or semitransparent material), which is complementary in shape to that of container 5 and has a circular-section dead hole 18 on the center of its rear or inner face 17b directly facing the bottom of container 5.

Dead hole 18 defines the seat of LED/s 7, and the rear or inner face 17b of flat sheet 17 is shaped so that the thickness of sheet 17 decreases unevenly from the dead hole 18 towards the periphery of the sheet to form a number of concentric annular surfaces 19 having a substantially truncated-cone profile and delimited by corresponding annular steps 20 surrounding and substantially coaxial with dead hole 18.

More specifically, with reference to Figure 8, in the example shown front face 17a of flat sheet 17 is substantially parallel to the reference plane on which sheet 17 extends, whereas each concentric annular surface 19 of rear face 17b has a truncated-cone profile in which the cone generatrix line is sloped of an angle α preferably, though not necessarily, ranging between 0 and 30 degrees with respect to the reference plane on which flat sheet 17 extends. In particular, in the example shown, each concentric annular surface 19 on rear face 17b is substantially parallel to front face 17a of flat sheet 17.

Each annular step 20, in turn, has a substantially truncated-cone profile in which the cone generatrix line is sloped of an angle β preferably, though not necessarily, ranging between 30 and 60 degrees, and preferably, though not necessarily, equal to 45 degrees with respect to the plane on which sheet 17 extends, so that the light rays traveling along the body of sheet 17 substantially parallel to the plane on which sheet 17 extends, impinge on the surface of annular step 20 at an incidence angle which is locally greater than the limit angle, and are reflected onto front face 17a of flat sheet 17 on the basis of the same physical principles governing the propagation of light inside optical-fibre cables.

In other words, there are no grooves on the surface of rear face 17b, and the Fresnel-type profile of rear face 17b is obtained by means of concentric annular surfaces 19 with truncated-cone profile, jointed by annular steps 20 with truncated-cone profile. This solution allows considerable material saving.

In this embodiment, the bottom of container 5 may be optionally shaped to follow the Fresnel-type profile of the rear face 17b of flat sheet 17.

According to a structural variation of the lighting device embodiments referred above, the dead hole 9, 15 or 18 defining the seat for LED/s 7 may be realized on the front face of flat sheet 6, 14 or 17.

Finally, electric household appliance 2 may also be a dishwasher, a washing machine, an oven, a laundry drier, or a suction hood for lighting a hob underneath.

## Claims

1. An electric household appliance (2) comprising a box casing (3) having an inner compartment (4), and at least one lighting device (1) located inside said compartment (4); said lighting device (1) comprising a substantially flat body (6, 14, 17) of transparent and/or semitransparent material, and at least one light-emitting diode (7) optically coupled to said flat body (6, 14, 17) to project the emitted light inside of said flat body (6, 14, 17) sideways of the latter, so as to cause the emitted light to travel inside the flat body (6, 14, 17) which acts as a light guide; said flat body (6, 14, 17) having a front face (6a, 17a) and a rear face (6b, 14b, 17b) opposite one to the other, and being designed so that the light produced by said at least one diode (7) issues from said front face (6a); said electric household appliance (2) being **characterized in that** said flat body (6, 14, 17) is designed so that the surface of the rear face (6b, 14b, 17b) has a Fresnel type lens relief pattern, in order to reflect the light produced by said at least one diode (7) and traveling inside said flat body (6, 14, 17), outwards of the flat body (6, 14, 17) through the front face (6a) of said flat body (6, 14, 17); the front (6a, 17a) or rear face (6b, 14b, 17b) of said flat body (6, 14, 17) also having at least one seat (9, 15, 18), and said at least one light-emitting diode (7) being housed inside said seat (9, 15, 18).

2. An electric household appliance as claimed in Claim 1, **characterized in that** said seat (9, 15, 18) is located substantially at the centre of the rear face (6b, 14b, 17b) of said flat body (6, 14, 17).

3. An electric household appliance as claimed in Claims 1 or 2, **characterized in that** said flat body (6, 14, 17) comprises a flat sheet (6) of transparent or semitransparent material, having a main dead hole (9) on its rear face (6b); the rear face (6b) of said flat sheet (6) defining the rear face (6b, 14b, 17b) of said flat body (6, 14, 17) and comprising a number of grooves (8) imparting to the surface of said rear face (6b) a serrated profile similar to that of a Fresnel lens; the main dead hole (9) on the rear face (6b) of said flat sheet (6) defining the seat (9, 15, 18) for said at least one light-emitting diode (7).

4. An electric household appliance as claimed in Claim 3, **characterized in that** said grooves (8) are concentric annular grooves (8) surrounding and substantially coaxial with said main dead hole (9).

5. An electric household appliance as claimed in Claim 4, **characterized in that** the maximum depth (p) of said concentric annular grooves (8) increases alongside an increase in the distance from the main dead hole (9) housing said at least one light-emitting diode (7).

6. An electric household appliance as claimed in Claim 1 or 2, **characterized in that** said flat body (6, 14, 17) comprises a flat sheet (17) of transparent or semitransparent material, having a main dead hole (18) on its rear face (17); the rear face (17b) of said flat sheet (17) defining the rear face (6b, 14b, 17b) of said flat body (6, 14, 17) and being shaped so as that the thickness of the flat sheet (17) decreases unevenly from said main dead hole (18) towards the periphery of the sheet, to form a number of concentric annular surfaces (19) delimited by corresponding annular steps (20) surrounding and substantially coaxial with said main dead hole (18); the main dead hole (18) on the rear face (17b) of said flat sheet (17) defining the seat (9, 15, 18) for said at least one light-emitting diode (7).

7. An electric household appliance as claimed in Claim 6, **characterized in that** each of said concentric annular surfaces (19) has a truncated-cone profile in which the cone generatrix line is sloped of a given angle (α) ranging between 0 and 30 degrees with respect to the reference plane on which said flat sheet (17) extends.

8. An electric household appliance as claimed in Claim 6 or 7, **characterized in that** each of said annular steps (20) has a substantially truncated-cone profile in which the cone generatrix line is sloped of a given angle (β) ranging between 30 and 60 degrees with respect to the reference plane on which said flat sheet (17) extends.

9. An electric household appliance as claimed in Claim 1 or 2, **characterized in that** said flat body (6, 14, 17) comprises a flat sheet (14) of transparent or semitransparent material, having a substantially constant thickness and a main dead hole (15) on its rear face (14b); the rear face (14b) of said flat sheet (14) defining the rear face (6b, 14b, 17b) of said flat body (6, 14, 17), and comprising a number of auxiliary blind holes (16) which are evenly distributed on said rear face (14b), have a nominal diameter smaller than that of the main dead hole (15), and have a maximum depth which increases alongside an increase in the distance from said main dead hole (15); the main dead hole (15) on the rear face (14b) of said flat sheet (14) defining the seat (9, 15, 18) for said at least one light-emitting diode (7).

10. An electric household appliance as claimed in any one of the foregoing Claims, **characterized in that** said lighting device (1) also comprises covering means (5, 11) designed to at least partially cover the rear face (6b, 14b, 17b) of said flat body (6, 14, 17), so as to reflect/diffuse the light back onto said flat body (6, 14, 17), and hence towards the front face (6a) of said flat body (6, 14, 17).

11. An electric household appliance as claimed in any one of the foregoing Claims, **characterized in that** said lighting device (1) comprises at least one diode (7) which is housed inside the seat (9, 15, 18) so that the optical axis (A) of the light cone produced by the diode is substantially perpendicular to the plane on which the flat body (6, 14, 17) extends; and at least one optical device (10) arranged inside the seat (9, 15, 18) to divert the light emitted by said diode (7) along a directrix locally substantially parallel to the plane on which said flat body (6, 14, 17) extends, so as to cause the diverted light to enter the flat body (6, 14, 17) through the side of said flat body (6, 14, 17).

12. A lighting device (1) for indoors and outdoors comprising a substantially flat body (6, 14, 17) of transparent and/or semitransparent material and having a front face (6a) and a rear face (6b, 14b, 17b) opposite one to the other, supporting means (5) adapted to be fixed to the ceiling or wall or floor for supporting said flat body (6, 14, 17), and at least one light-emitting diode (7) optically coupled to said flat body (6, 14, 17) to project the emitted light inside of said flat body (6, 14, 17) sideways of the latter, so as to cause the emitted light to travel inside the flat body (6, 14, 17) which acts as a light guide; said lighting device (1) being **characterized in that** said flat body (6, 14, 17) is designed so that the surface of the rear face (6b, 14b, 17b) has a Fresnel type lens relief pattern, in order to reflect the light produced by said at least one diode (7) and traveling inside the flat body (6, 14, 17), outwards of the flat body (6, 14, 17) through the front face (6a) of said flat body (6, 14, 17); the front (6a, 17a) or rear face (6b, 14b, 17b) of said flat body (6, 14, 17) also having at least one seat (9, 15, 18), and said at least one light-emitting diode (7) being housed inside said seat (9, 15, 18).

13. A lighting device as claimed in Claim 12, **characterized in that** said seat (9, 15, 18) is located on the rear face (6b, 14b, 17b) of said flat body (6, 14, 17), substantially at the centre of said rear face (6b, 14b, 17b).

14. A lighting device as claimed in Claim 12 or 13, **characterized in that** said flat body (6, 14, 17) comprises a flat sheet (6) of transparent or semitransparent material, having a main dead hole (9) on its rear face (6b); the rear face (6b) of said flat sheet (6) defining the rear face (6b, 14b, 17b) of said flat body (6, 14, 17) and comprising a number of grooves (8) imparting to the surface of said rear face (6b) a serrated profile similar to that of a Fresnel lens; the main dead hole (9) on the rear face (6b) of said flat sheet (6) defining the seat (9, 15, 18) for said at least one light-emitting diode (7).

15. A lighting device as claimed in Claim 14, **characterized in that** said grooves (8) are concentric annular grooves (8) surrounding and substantially coaxial with said main dead hole (9).

16. A lighting device as claimed in Claim 15, **characterized in that** the maximum depth (p) of said concentric annular grooves (8) increases alongside an increase in the distance from the main dead hole (9) housing said at least one light-emitting diode (7).

17. A lighting device as claimed in Claim 12 or 13, **characterized in that** said flat body (6, 14, 17) comprises a flat sheet (17) of transparent or semitransparent material, having a main dead hole (18) on its rear face (17); the rear face (17b) of said flat sheet (17) defining the rear face (6b, 14b, 17b) of said flat body (6, 14, 17) and being shaped so as that the thickness of the flat sheet (17) decreases unevenly from said main dead hole (18) towards the periphery of the sheet, to form a number of concentric annular surfaces (19) delimited by corresponding annular steps (20) surrounding and substantially coaxial with said main dead hole (18); the main dead hole (18) on the rear face (17b) of said flat sheet (17) defining the seat (9, 15, 18) for said at least one light-emitting diode (7).

18. A lighting device as claimed in Claim 17, **characterized in that** each of said concentric annular surfaces (19) has a truncated-cone profile in which the cone generatrix line is sloped of a given angle (α) ranging between 0 and 30 degrees with respect to the reference plane on which said flat sheet (17) extends.

19. A lighting device as claimed in Claim 17 or 18, **characterized in that** each of said annular steps (20) has a substantially truncated-cone profile in which the cone generatrix line is sloped of a given angle (β) ranging between 30 and 60 degrees with respect to the reference plane on which said flat sheet (17) extends.

20. A lighting device as claimed in Claim 12 or 13, **characterized in that** said flat body (6, 14, 17) comprises a flat sheet (14) of transparent or semitransparent material, having a substantially constant thickness and a main dead hole (15) on its rear face (14b); the rear face (14b) of said flat sheet (14) defining the rear face (6b, 14b, 17b) of said flat body (6, 14, 17), and comprising a number of auxiliary blind holes (16) which are evenly distributed on said rear face (14b), have a nominal diameter smaller than that of the main dead hole (15), and have a maximum depth which increases alongside an increase in the distance from said main dead hole (15); the main dead hole (15) on the rear face (14b) of said flat sheet (14) defining the seat (9, 15, 18) for said at least one light-emitting diode (7).

21. A lighting device as claimed in anyone of Claims 12 to 20, **characterized by** also comprising covering means (5, 11) designed to at least partially cover the rear face (6b, 14b, 17b) of said flat body (6, 14, 17), so as to reflect/diffuse the light back onto said flat body (6, 14, 17), and hence towards the front face (6a) of said flat body (6, 14, 17).

22. A lighting device as claimed in anyone of Claims 12 to 21, **characterized by** also comprising at least one diode (7) which is housed inside the seat (9, 15, 18) so that the optical axis (A) of the light cone produced by the diode is substantially perpendicular to the plane on which the flat body (6, 14, 17) extends; and at least one optical device (10) arranged inside the seat (9, 15, 18) to divert the light emitted by said diode (7) along a directrix locally substantially parallel to the plane on which said flat body (6, 14, 17) extends, so as to cause the diverted light to enter the flat body (6, 14, 17) through the side of said flat body (6, 14, 17).
